(19) Europäisches Patentamt
European Patent Office
Office européen des brevets

(11) **EP 4 769 234 A1**

(12) **EUROPEAN PATENT APPLICATION**

(43) Date of publication:
**01.07.2026 Bulletin 2026/27**

(21) Application number: **24223812.9**

(22) Date of filing: **31.12.2024**

(51) International Patent Classification (IPC):
**G06N 5/01** $^{(2023.01)}$    **G06N 10/60** $^{(2022.01)}$
**G06N 3/045** $^{(2023.01)}$

(52) Cooperative Patent Classification (CPC):
**G06N 5/01; G06N 10/60;** G06N 3/045

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Multiverse Computing S.L.
Gipuzkoa (ES)**

(72) Inventors:
• **Dunnett, Angus
92800 Paris (FR)**
• **Mugel, Samuel
Toronto, M5C 2T2 (CA)**
• **Orús, Román
20014 Donostia-San Sebastián (ES)**

(54) **TENSOR NETWORK ANNEALING METHOD AND SYSTEM FOR OPTIMIZATION OF MACHINE LEARNING TASKS**

(57)    A computer-implemented method for performing computational optimization in machine learning and data science involves a system equipped with at least one processor and memory. This method encompasses storing vectors, defining vector-scalar multiplication, and configuring the processor to operate as an annealer. Key steps include transforming a multivariable binary function into a matrix product state (MPS) format, constructing the MPS with a specific bond dimension, and decomposing vectors for optimal efficiency. The method employs a maximal bond dimension for the tensor train, determining its final state, and utilizes tensor network compression techniques to compress the matrix product state. It addresses Quadratic Unconstrained Binary Optimization (QUBO), frequently used in machine learning, to optimize binary functions. Additionally, the system includes a computer program product and a computer-readable data carrier for executing this method, providing a robust framework for annealing tasks and optimization using memory and processor configurations designed for matrix product state representation and compression.

Figure 5

**Description**

**CROSS-REFERENCE TO RELATED APPLICATIONS**

None.

**TECHNICAL FIELD OF THE INVENTION**

The disclosure relates to a method and a system that establishes good solutions to large optimization problems with discrete or binary variables, in a reasonable amount of time.

Specifically, but without limitation, the disclosure pertains to a computer-implemented method and a system that provides fast solution for large optimization problems with discrete or binary variables in many fields such as logistics, telecommunications, machine learning, finance, and manufacturing.

**BACKGROUND OF THE INVENTION**

Optimization problems are prevalent in various fields such as operations research, computer science, and engineering. These problems often involve finding the best solution from a set of feasible solutions, and they can be particularly challenging when the especially limited resource for computational optimization tasks in machine learning, and data science.

Combinatorial optimization problems, especially those involving binary or discrete variables, present a significant challenge due to their non-convex nature and exponential growth in complexity as the number of variables increases. Traditional methods such as gradient descent are not suitable for non-convex problems, and exact methods, like branch and bound, become computationally infeasible for large instances. Heuristic methods, such as simulated annealing or genetic algorithms, have emerged as practical solutions to tackle such problems in reasonable timeframes. However, as the problem size increases, even heuristic methods may struggle due to the intrinsic complexity of the optimization task, particularly in the case of Quadratic Unconstrained Binary Optimization (QUBO) problems. Despite the availability of numerous powerful heuristics for QUBO, they suffer from the problem's inherent quadratic complexity, limiting their effectiveness for very large-scale instances.

In state of the art, simulated annealing is inspired by the annealing process in metallurgy, where controlled cooling of a material allows it to reach a stable state with minimal energy. In optimization, this translates to exploring the solution space at high 'temperatures' to avoid local minima and gradually 'cooling' to converge on a global minimum. However, as optimization problems grow in complexity, especially with the advent of quantum computing and large-scale data, there is a need for more sophisticated methods that can efficiently handle high-dimensional and non-linear problems.

The challenge lies in developing algorithms that can leverage new mathematical representations that directly effects the processors with computational techniques to improve performance and scalability in solving these complex optimization problems.

Tensor networks, have found significant applications in solving complex optimization problems, they are highly efficient at representing and manipulating large tensors (multi-dimensional arrays) using decompositions, making them useful for various computational tasks in optimization, machine learning, and data science

Tensor network methods, which originated in quantum physics, have shown promise in representing complex multivariate functions efficiently, especially those related to large-scale and high-dimensional data and commonly used tasks in optimization, machine learning, and data science. However, existing approaches are either not optimized for discrete variable problems or do not fully leverage the potential of tensor networks to handle large QUBO and other optimization problems.

Patent document annealing system. However, this system does not apply to optimization with compressing or classical processor and does not address reducing computational costs while maintaining high accuracy.

The time it takes to solve many computing problems has been reduced considerably thanks to quantum computing. In this sense, for example U.S. Pat. No. 10,691,771-B2 provides a method for generating an embedding pattern used for solving an Integer Linear Programming problem using a Physical Ising Machine, EP-3664099-A1 provides a method for solving an exchange problem, whereas U.S. Pat. No. 9,152,746-B2 provides a quantum annealer simulator for solving optimization problems. However, these solutions do not apply to optimization with compressing or classical processor and does not address reducing computational costs while maintaining high accuracy.

U.S. Pat. No. 11,907,325-B2 explains a solution that cost function is relates a QUBO, U.S. Pat. Pub. No. US20230409961-A1 explains a system that provides application of the MPS to machine learning tasks. However, these methods do not address solving the problem with multi-variate binary function representation or simulated annealing method and does not implement genera TN solution for all QUBO problems.

As a result, all the problems listed above require innovation in the relevant field.

## SUMMARY

The present disclosure addresses abovementioned challenges and to make a development in the relevant technical field.

The disclosure is related to tensor network annealing method and system for optimization of machine learning tasks to fulfil one, some or all aims mentioned above and will be obtained from the following detailed description. The disclosure is also related to: data processing systems with means for carrying out the methods; computer program products comprising instructions which, when the program products are executed by at least one computing unit, cause the at least one computing unit to carry out the methods; and computer-readable data carrier having stored thereon the computer program products, which may be computer-readable non-transitory storage mediums in some examples.

An objective of the disclosure, providing a method that runs on a computer and the method configures at least one processor to providing leverage the compact Matrix Product State (MPS) representation of a data with tensorizing to find approximate solutions to large-scale problems, such as Quadratic Unconstrained Binary Optimization (QUBO) problems of the data that stored within at least one memory medium to ensuring faster computation times without sacrificing solution quality. The invention aims to address the limitations of current heuristic optimization methods when applied to large-scale combinatorial optimization problems.

Another objective of the disclosure, configuring at least one processor to resolving optimization problems in a data that stored on at least one memory medium with compressing the data for increasing computational efficiency.

Another objective of the disclosure, configuring the data as a QUBO function within at least one memory medium with at least one processor and configuring at least one processor to calculate pre-defined function with tensor network solutions.

Another objective of the disclosure, reducing the inherent quadratic complexity of QUBO and similar optimization problems by employing tensor network compression techniques, such as the Matrix Product State (MPS) representation.

Another objective of the disclosure is to provide an additional advantage by utilizing the MPS representation (accurate tensor train representations), which encompasses a broader range of functions beyond just QUBO. This capability enables solutions for optimization tasks that support algorithmic advancements in the field of machine learning.

Another objective of the disclosure, create a solution to large optimization problems with discrete or binary variables.

Another objective of the disclosure, extending the applicability of the method to other multivariate functions within the computational tasks, even those only partially known or accessible through an oracle, by generalizing the MPS-based approach beyond QUBO problems.

Another objective of the disclosure, provide a MPS simulated annealing method which is defined in the disclosure, can present an advantage over QUBO simulated annealing solutions for cases where $N\chi^2 < N_{nz}$.

Another object of the disclosure, defining the multi-variate binary function in the MPS format for computational tasks within machine learning technique.

Another objective of the disclosure is to approximate the multi-variate binary function using a cross-approximation technique for tensor trains (TT-cross) prior to representing the multi-variate binary function in the MPS format.

In accordance with embodiments, a computer-implemented method is provided for computational optimization tasks in machine learning, and data science; a system comprising: at least one processor source which is at least one processor; and at least one memory medium that storing data to be optimized and the configuration parameters of the processor, wherein the method further comprises: storing at least one vector within the memory medium and defining vector-scalar multiplication followed by a vector addition parameter on the multi-variate binary function; and the method characterized by configuring the processor to run as an annealer with following steps: obtaining to multi-variate binary function which is a data that stored within the memory medium; creating data in a matrix product state (MPS) format from the multi-variate binary function by generating a representation through matrix multiplications selected from matrices corresponding to binary variables with an MPS generator; construction of the matrix product state with a bond dimension with the MPS constructor; decomposing at least one vector in the matrix product state structure of the data with the MPS decomposition module to achieve optimal decomposition; applying maximal bond dimension to the tensor train of the matrix product state according to the number of variables; determining and storing final state of the tensor train within the memory medium.

In accordance with further embodiments, wherein compressing the obtained Matrix Product State accomplished with the configuration of the MPS representation using a tensor network compression technique to reduce a bond dimension of the MPS data with a TN compressor.

In accordance with further embodiments, wherein the multi-variate binary function is a Quadratic Unconstrained Binary Optimization (QUBO) problem function that is stored as a data within the memory medium.

In accordance with further embodiments, wherein the data which consist tensor train format minimizes a multi-variate, binary function by processor for machine learning tasks.

In accordance with further embodiments, wherein the processor is configured to computing a first derivative of the multi-variate binary function as a product of matrices; and caching within the memory medium intermediate results to reduce a complexity of computing the first derivative.

In accordance with further embodiments, wherein the processor is configured to updating a single matrix in the MPS representation when a variable changes that is a data stored in the storage medium.

In accordance with further embodiments, wherein the multi-variate binary function is simulated annealing algorithm which is a pre-defined function data for an instruction to the processor that stored in the memory medium. The pre-defined function data may be algorithm that covers the function with computational representation of any computer processor.

In accordance with further embodiments, wherein configuring the processor for resolving optimization problems in a data that stored on at least one memory medium with compressing the data with tensorization step which are achieved by reduce a bond dimension of the MPS representation that obtained with MPS generator , MPS constructor and MPS decomposition module for increasing computational efficiency.

In accordance with further embodiments, wherein construction of the matrix product state with a bond dimension no longer than N/2, where N is the number of variables with the MPS constructor.

In accordance with further embodiments, wherein the processor configured to computing a first derivative of the multi-variate binary function as a product of matrices; and updating a single matrix in the MPS representation when a variable changes for minimizing the multi-variate binary function using the simulated annealing algorithm adapted for the MPS format.

In accordance with further embodiments the system that runs the method comprises, at least one classical computer that includes at least one processor that initialized the data and at least one quantum device that communicated the classical computer and includes at least one quantum processor as a processor and quantum processor process the data and sends results to the classical computer.

Another embodiment of the disclosure, the system is configured to solve machine learning problems which is defined as QUBO by representing the binary function as an MPS data structure within the memory medium. The bond dimension of the MPS is minimized for efficient computation, and the system is adapted to adjust dynamically for changes in variables, improving accuracy and computational resource usage.

The protection scope of the disclosure is specified in the claims and cannot be limited to the description made for illustrative purposes in this brief and detailed description. It is clear that a person skilled in the art can present similar embodiments in the light of the above and following descriptions without departing from the main theme of the disclosure.

## BRIEF DESCRIPTION OF DRAWINGS

For better understanding of the various embodiments described herein, and to show more clearly how these various embodiments may be carried into effect, reference will be made, by way of example, to the accompanying drawings which show at least one example embodiment, and which are now described. The drawings are not intended to limit the scope of the teaching described herein.

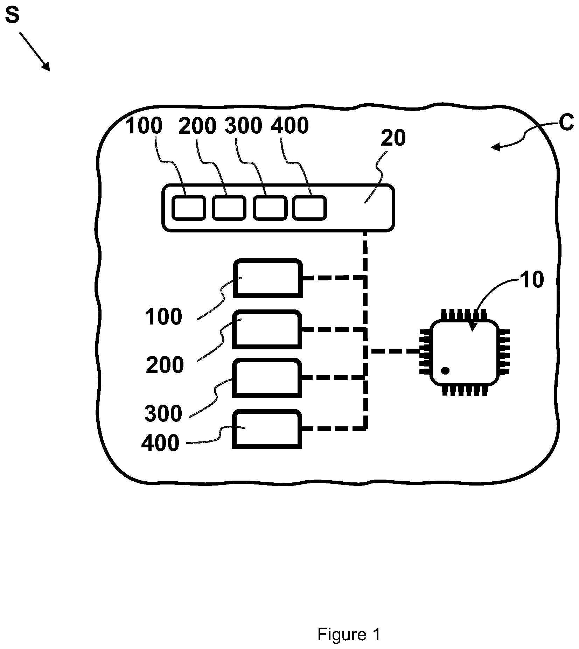

Figure 1 represents some embodiments of the disclosure.

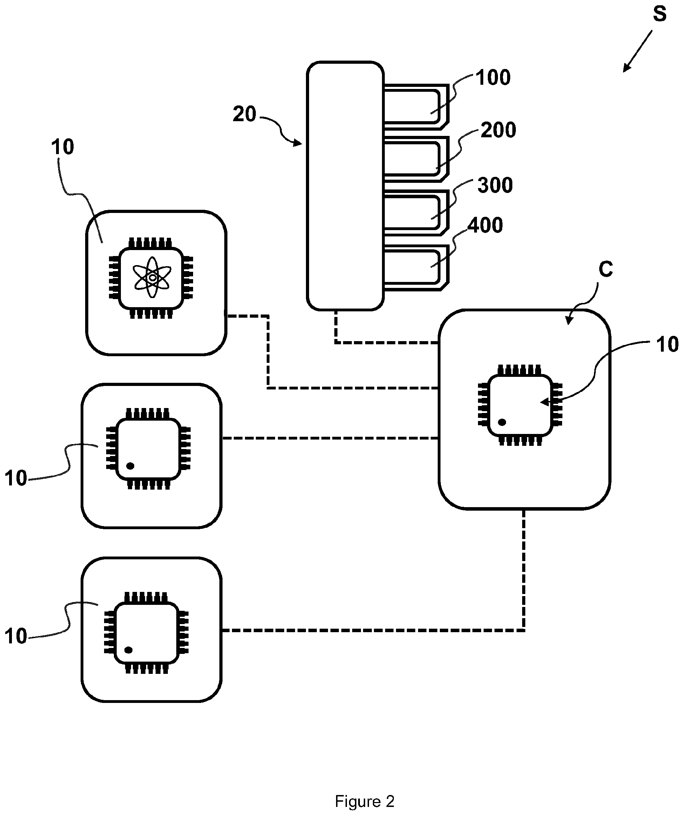

Figure 2 represents some embodiments of the disclosure.

Figure 3 illustrates in a flowchart that shows the steps of a method in accordance with some embodiments of the disclosure.

Figure 4 shows the tensorized annealing algorithm that annotated with diagrams.

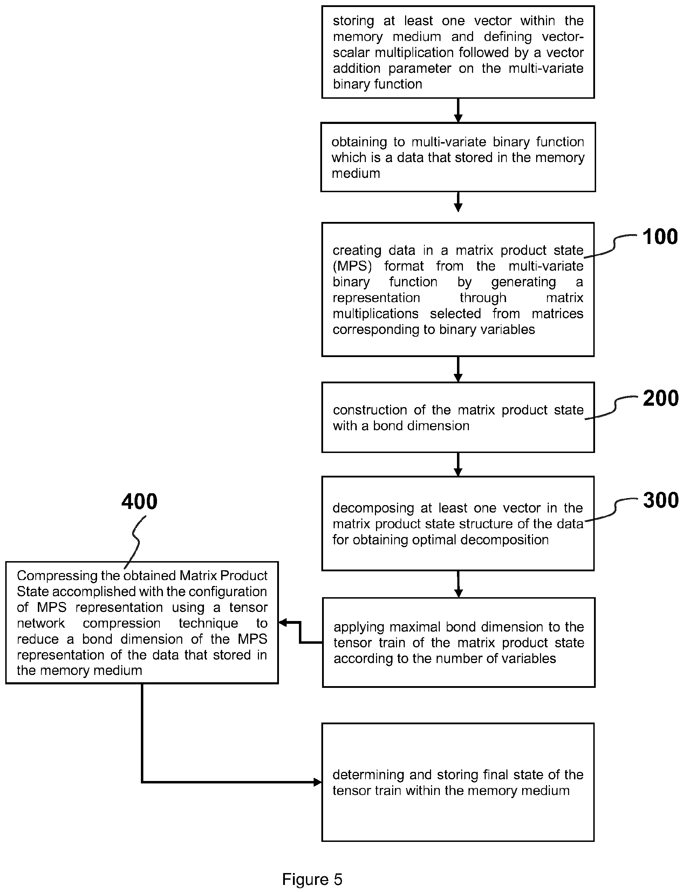

Figure 5 illustrates in a flowchart that shows the steps of a method in accordance with some embodiments of the disclosure.

For a better understanding of the above-mentioned figures, the reference numbers illustrated in the figures are provided for descriptive purposes and are not intended to limit the scope of the disclosure.

## DETAILED DESCRIPTION OF THE INVENTION

In this detailed description, tensor network annealing method and system (S) for optimization of machine learning tasks is described by means of examples only for clarifying the subject matter without any limitation of the scope of the disclosure.

A computer-implemented method for computational optimization tasks in machine learning, and data science; a system (S) comprising: at least one processor source which is at least one processor (10); and at least one memory medium (20) that storing data to be optimized and the configuration parameters of the processor (10), wherein the method further comprises: storing at least one vector within the memory medium (20) and defining vector-scalar multiplication followed by a vector addition parameter on the multi-variate binary function; and the method characterized by configuring the processor (10) to run as an annealer with following steps: obtaining to multi-variate binary function which is a data that stored within the memory medium (20); creating data in a matrix product state (MPS) format from the multi-variate binary function by generating a representation through matrix multiplications selected from matrices corresponding to binary variables with an MPS generator (100); construction of the matrix product state with a bond dimension with the MPS constructor (200); decomposing at least one vector in the matrix product state structure of the data with the MPS decomposition module (300) to achieve optimal decomposition; applying maximal bond dimension to the tensor train of the matrix product state according to the number of variables; determining and storing final state of the tensor train within the memory medium (20).

According to the disclosure, the method provides, Matrix Product State (MPS) Generation and Configuration step which is provided by at least one processor (10) in a computational system (S). The processor (10) is configured to act as an annealer with the stored data which is based on mathematical equations within the memory medium (20).

The method involves storing vectors within the memory medium (20) and defining vector-scalar multiplication followed by vector addition as parameters on the multi-variate binary function. This binary function, specifically formulated for optimization tasks, is stored within the memory medium (20). According to method, processor (10) is configured to optimization solutions for machine learning tasks with tensorizing a multi-variate, binary function $f: \{-1,1\}^N \rightarrow \mathbb{R}$, which is $f(x)$, where $x = (x_1, x_2, x_3, \cdots, x_N)$, and $N$ is the number of variables is predefined in the memory medium (20). The function minimized the binary variables where $x_i \in \{-1,1\}$ is representing the binary nature of the variables and this step simplifies the implementation of the MPS.

The processor (10) configured to retrieving the multi-variate binary function, such as a QUBO problem, stored in the memory medium (20). According to the method, the function data represented in the Eq. 1 which is stored in the memory medium (20), where $Q$ is a symmetric N by N matrix.

$$f(x) = x^T Q x, \tag{1}$$

According to the Eq. 1 first and second derivatives of the objective function can represent as

$$\frac{df}{dx} = Qx \tag{2}$$

$$\frac{d^2 f}{dx^2} = Q. \tag{3}$$

The method includes MPS generation step which is provided at least one MPS generator (100) which is a data stored within the memory medium (20) to configure the processor (10). According to this step; creating a data structure in MPS format by selecting matrices based on binary variables and generating a representation established by the processor (10). To providing that; processor (10) is configured to define the simulated annealing algorithm for a multi-variate binary function encoded by a matrix product state (MPS). For providing this function is stored as a data with

$$f(\boldsymbol{x}) = \prod_{i=0}^{N-1} A_i^{x_i}, \tag{4}$$

Within the memory medium (20). According to this configuration, where $A_i^1$ and $A_i^{-1}$ are $\chi_i \times \chi_{i+1}$ matrices. The value of the function at any point is thus obtained by multiplying the $N$ matrices selected by the binary variables $x_i$. By requiring $\chi_0 = \chi_{N+1} = 1$ ensuring that the function is scalar valued.

The processor (10) configuration according to the stored data within the memory medium. (20) which is configured from the form in Eq. 4 is capable of capturing many complex functions which is defined as a data package for machine learning encoding tasks. The space complexity of the Matrix Product State (MPS) format is $\mathcal{O}(N\chi^2)$ where $\chi$ is the equivalent constant bond dimension. In particular, according to the configuration for Quadratic Unconstrained Binary Optimization (QUBO) can be represented as an MPS with $\chi \leq N/2$ leading to a space complexity of at most $\mathcal{O}(N^3)$. While

the worst-case scaling of the MPS representation is less favorable than storing $Q$ directly as a dense matrix (space complexity $\mathcal{O}(N^2)$). In certain cases, $\chi$ will be significantly smaller than the upper bound leading to better scaling. In additionally, using sparse format for storing the MPS matrices, recovers the quadratic space complexity.

The Eq. 2 MPS representation is

$$\frac{\partial f}{\partial x_i} = \frac{\partial f}{\partial A_i^{x_i}} \frac{\partial A_i^{x_i}}{\partial x_i} = \prod_{k<i} A_k^{x_k} (A_i^1 - A_i^{-1}) \prod_{k>i} A_k^{x_k} \tag{5}$$

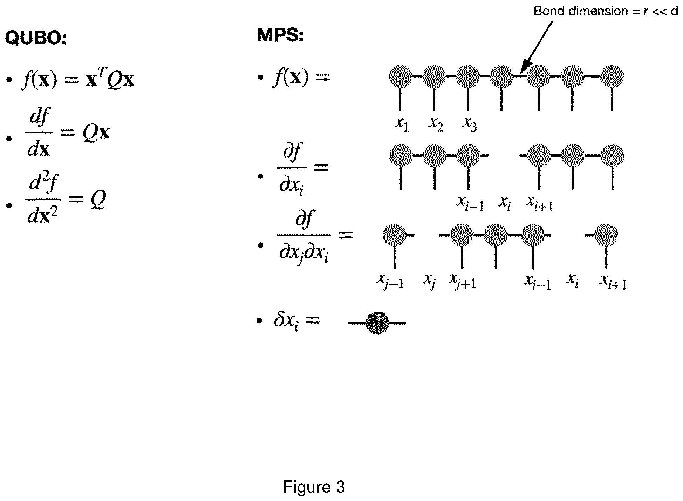

And it is stored in the memory medium (20). In contrast to the above, the first derivative of $f$ is computed with the processor (10) as a product of $N$ matrices instead of a single matrix vector product. Since the only dependence of $f$ on a variable $x_i$ is through the matrix $A_i^{x_i}$, updating $\frac{\partial f}{\partial x_i}$ when $x_i$ changes only involve changing the single matrix $A_i^{x_i}$. Figure 3 shows comparison between QUBO and the method.

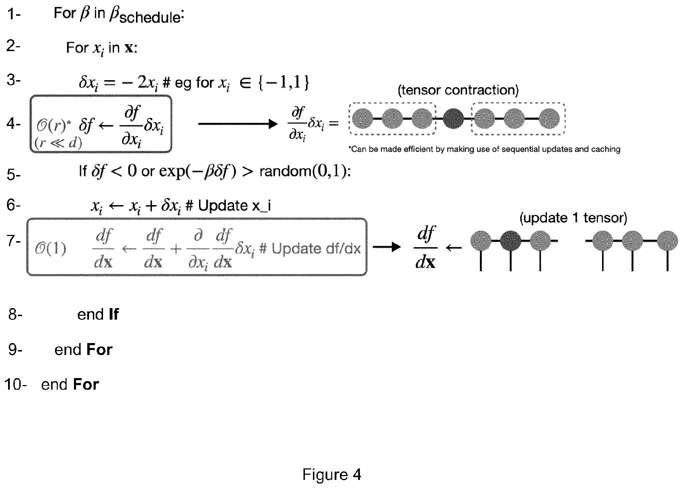

Thus, it provides constant time operation in the algorithm. Figure 4 shows the algorithm that sets the processor (10). Step 7 whereas step 4 has a complexity of $\mathcal{O}(N\chi^2)$. According to the configuration, processor (10) updates the variables sequentially from 0 to $N$-1, and it caches on at least one memory medium (20) to reduce the complexity of step 4 (tensor contraction step) to $\mathcal{O}(\chi^2)$. The overall time complexity of MPS simulated annealing is, therefore $\mathcal{O}(N\chi^2)$.

The method involves constructing the MPS with a bond dimension, utilizing the MPS constructor (200) which may be a non-transitional memory medium (20) to achieve an optimal state representation for computational efficiency. And also, a MPS decomposition module (300) which may be a non-transitional memory medium (20) decomposes vectors within the MPS format to facilitate optimal data decomposition and storage.

According to the disclosure, any QUBO can be represented as a subject matter method and provide a solution for Quadratic Unconstrained Binary Optimization tasks. The method includes representation of a quadratic function of N discrete variables as an MPS with a bond dimension no larger than N12. The definition of the function within the memory medium (20) as a scalar product;

$$f(x) = \sum_{i,j} x_i Q_{ij} x_j = A_{[:k]}^{\{x_i|i\leq k\}} B_{[k+1:]}^{\{x_i|i>k\}} \tag{6}$$

And with the following definitions;

$$A_{[:k]}^{\{x_i|i\leq k\}} = \left( \sum_{i,j\leq k} Q_{ij} x_i x_j \quad \sum_{i,j\leq k} Q_{iN} x_i \quad \sum_{i,j\leq k} Q_{iN-1} x_i \quad \cdots \quad \sum_{i,j\leq k} Q_{ik+1} x_i \quad 1 \right) \tag{7}$$

$$B_{[k+1:]}^{\{x_i|i>k\}} = \begin{pmatrix} 1 \\ x_N \\ x_{N-1} \\ \vdots \\ x_{k+1} \sum_{i,j>k} Q_{ij} x_i x_j \end{pmatrix} \tag{8}$$

The dimension of the two vectors is $N - k + 1$. Then, the right vector decomposed as Eq.9.

$$B_{[k+1:]}^{\{x_i|i>k\}} = B_{k+1}^{x_{k+1}} B_{[k+2:]}^{\{x_i|i>k+1\}}, \tag{9}$$

Where

$$B_{k+1}^{x_{k+1}} = \begin{pmatrix} 1 & 0 & 0 & \cdots & 0 & 0 \\ 0 & 1 & 0 & \cdots & 0 & 0 \\ 0 & 0 & 1 & \cdots & 0 & 0 \\ \vdots & \vdots & \vdots & \ddots & \vdots & \vdots \\ 0 & 0 & 0 & \cdots & 1 & 0 \\ x_{k+1} & 0 & 0 & \cdots & 0 & 0 \\ Q_{k+1k+1}x_{k+1}^2 & Q_{k+1N}x_{k+1} & Q_{k+1N-1}x_{k+1} & \cdots & Q_{k+1k+2}x_{k+1} & 1 \end{pmatrix}, \tag{10}$$

$$B_{[k+2:]}^{\{x_i|i>k+1\}} = \begin{pmatrix} 1 \\ x_N \\ x_{N-1} \\ \vdots \\ x_{k+2} \\ \sum_{i,j>k+1} Q_{ij}\,x_i x_j \end{pmatrix}. \tag{11}$$

Setting $k = 0$ in Eq. 6 which is stored in the memory medium (20) and employing the decomposition of Eq. 9 which is defined in the memory medium (20) iteratively, one obtains matrices $B_i^{x_i}$ for all $i$ which constitutes an MPS representation of $f(x)$ according to Eq. 4. The maximum bond dimension of this MPS is $N + 1$.

A more optimal MPO decomposition can be obtained by decomposing the right vector as:

$$A_{[:k]}^{\{x_i|i\le k\}} = A_{[:k-1]}^{\{x_i|i<k\}} C_k^{x_k}, \tag{12}$$

Where

$$A_{[:k-1]}^{\{x_i|i<k\}} = \begin{pmatrix} 1 & x_1 & x_2 & \cdots & x_{k-1} & \sum_{i,j<k} Q_{ij}\,x_i x_j \end{pmatrix}, \tag{13}$$

$$C_k^{x_k} = \begin{pmatrix} Q_{kk}x_k^2 & Q_{kN}x_k & Q_{kN-1}x_k & \cdots & Q_{kk+1}x_k & 1 \\ Q_{1k}x_k & Q_{1N} & Q_{1N-1} & \cdots & Q_{1k+1} & 0 \\ Q_{2k}x_k & Q_{2N} & Q_{2N-1} & \cdots & Q_{2k+1} & 0 \\ \vdots & \vdots & \vdots & \ddots & \vdots & \vdots \\ Q_{k-1k}x_k & Q_{k-1N} & Q_{k-1N-1} & \cdots & Q_{k-1k+1} & 0 \\ 1 & 0 & 0 & \cdots & 0 & 0 \end{pmatrix}, \tag{14}$$

which yields the $k + 1 \times N - k + 2$ matrix $C_k^{x_k}$. According to the $A_{[:k-1]}^{\{x_i|i<k\}}$ has exactly the same structure as $B_{[k+2:]}^{\{x_i|i>k+1\}}$ it can reusable the decomposition of Eq. 9 on this tensor which results in tensors with smaller dimensions. Then, applying the decomposition Eq. 12 when $k = N/2$ will yield an MPO whose maximal bond dimension is $N/2 + 2$ (assuming $N$ is even). Thus provides a tensor train format of the QUBO which is stored in the memory medium (20) according to the above definitions.

In a preferred embodiment of the invention, compressing the obtained Matrix Product State accomplished with configuration of the MPS representation using a tensor network compression technique to reduce a bond dimension of the MPS data with a TN compressor (400) which may be a data stored within memory medium (20) or a non-transitional memory medium (20) that configures the processor (10).

In a preferred embodiment of the invention, standard rounding procedures such as the TT-SVD algorithm can be applied resulting in a compressed tensor train with bond dimension often significantly lower than $N/2 + 2$. The resulting compact object can then pass to annealing algorithm that pre-defined/calculated by the processor (10) in the memory medium (20) accordingly the method to obtain solutions to the original QUBO machine learning problem.

In alternative embodiment of the disclosure, Furthermore, the combination of subject matter method which explains a TN annealing algorithm/method with known analytical constructions of many basic functions [TT Functions], and generic approximation techniques such as TT-cross [TTCross], extends its applicability beyond QUBOs.

In accordance with further embodiments, wherein the tensor network compression technique is a tensor train singular value decomposition (TT-SVD) algorithm.

In accordance with further embodiments, minimizing the multi-variate binary function using the simulated annealing algorithm adapted for the MPS format includes caching steps of intermediate results to reduce a complexity of computing the first derivative.

In a preferred embodiment of the disclosure, method runs by a system (S) which is configured for optimizing a multi-variate binary function for annealing tasks for real world data, comprising: at least one memory medium (20) storing instructions; and at least one processor (10) or processor (10) group configured to execute the instructions to: A MPS generator (100) creates data in a matrix product state (MPS) format from the multi-variate binary function by generating a representation that selected from matrices corresponding to binary variables; a MPS constructor (200) employs construction of the matrix product state with a bond dimension from the configuration of the MPS representation that provided with multiplying matrices selected by binary variables; a MPS decomposition module (300) decomposes at least one vector in the matrix product state structure of the data for obtaining optimal decomposition; and TN compressor (400) applies maximal bond dimension to the tensor train of the matrix product state according to the number of variables for compressing the MPS representation using a tensor network compression technique to reduce a bond dimension of the data stored in the memory medium (20).

In accordance with further embodiments, a non-transitory computer-readable medium storing instructions that, when executed by a processor, cause the processor to optimize a multi-variate binary function using simulated annealing, wherein the multi-variate binary function is a Quadratic Unconstrained Binary Optimization (QUBO) problem; the instructions, when executed by the processor, further cause the processor to represent the QUBO problem as a Matrix Product State (MPS) with a bond dimension of no more than N/2, where N is the number of variables in the QUBO problem; and wherein the processor applies an adapted simulated annealing algorithm to the MPS representation of the QUBO problem to approximate a global optimum of the function.

In accordance with further embodiments, the memory medium (20) may store the program instructions for an operating system, program code for other applications, an input module, a plurality of machine learning models, an output module, and a database. The memory medium (20) specially configured according to the above mathematical formulation for machine learning tasks. The machine learning models may include, but are not limited to, image recognition and categorization algorithms based on deep learning models and other approaches. The database may be, for example, a local database, an external database, a database on the cloud, multiple databases, or a combination thereof.

The method and system (S) of the present disclosure can be applicable to any computation system with configurations as set out above. In a preferred embodiment of the disclosure, the method and system, the tensor network section of the method can run on a CPU, a GPU, or an FPGA, being this not a restriction of the disclosure.

Alternatively, there may be a plurality of processor (10), and these processors (10) may function in parallel and perform certain functions/process. Also, this processor (10) may work with a relation with other computers.

The processor (10) can also execute or be in relation to a graphical user interface (GUI) engine or graphics processing unit (GPU) that is used to generate various GUIs. The GUI engine provides data according to a certain layout for each user interface and also receives data input or control inputs from a user. The GUI then uses the inputs from the user to change the data that is shown on the current user interface or changes the operation of the server which may include showing a different user interface.

In accordance with further embodiments, the method may work with additional computing resources. In some implementations, the one or more classical processors, e.g., classical processor (10) may include supercomputers, i.e., computers with high levels of computational capacity. For example, the classical processor may represent a computational system with a large number of processors, e.g., a distributed computing system or a computer (C) cluster. Alternatively, additional computing resources may include one or more quantum simulators or quantum computer or quantum processor (10). e.g., quantum simulator.

According to the disclosure, the method and system (S) of the present disclosure can be applicable to any computation system (S) with the above-mentioned steps and mathematical equations which defined in at least one non-transitory or transitory computer-readable medium provides configuration of any computer processor (10) with alternative encoding techniques. The method establishes optimization solution with any data that is defined as a within machine learning technical field. The data stored in the memory medium (20) which is a computer (C) program that comprises program code that, when executed, configures the processor (10) for specific optimization tasks in the machine learning field to operate the system (S).

**REFERENCE NUMERALS**

10. Processor
20. Memory medium
C. Computer
S. System
100. MPS generator
200. MPS constructor
300. MPS decomposition module
400. TN compressor

**Definitions**

MPS: Matrix Product State
QUBO: Quadratic Unconstrained Binary Optimization

**Claims**

1. A computer-implemented method for computational optimization tasks in machine learning, and data science; comprising:

   at least one processor source which is at least one processor (10); and
   at least one memory medium (20) that storing data to be optimized and the configuration parameters of the processor (10),
   wherein the method further comprises:

   storing at least one vector within the memory medium (20) and defining vector-scalar multiplication followed by a vector addition parameter on the multi-variate binary function;
   and the method **characterized by** configuring the processor (10) to run as an annealer with following steps:

   obtaining to multi-variate binary function which is a data that stored within the memory medium (20);
   creating data in a matrix product state (MPS) format from the multi-variate binary function by generating a representation through matrix multiplications selected from matrices corresponding to binary variables with an MPS generator (100);
   construction of the matrix product state with a bond dimension with the MPS constructor (200);
   decomposing at least one vector in the matrix product state structure of the data with the MPS decomposition module (300) to achieve optimal decomposition;
   applying maximal bond dimension to the tensor train of the matrix product state according to the number of variables;
   determining and storing final state of the tensor train within the memory medium (20).

2. The method according to the claim 1, compressing the obtained Matrix Product State accomplished with the configuration of the MPS representation using a tensor network compression technique to reduce a bond dimension of the MPS data with a TN compressor (400).

3. The method according to any one of the preceding claims, wherein the multi-variate binary function is a Quadratic Unconstrained Binary Optimization (QUBO) problem function that is stored as a data within the memory medium (20).

4. The method according to any one of the preceding claims, wherein the data which consist tensor train format minimizes a multi-variate, binary function by processor (10) for machine learning tasks.

5. The method according to any one of the preceding claims, wherein the processor (10) is configured to computing a first derivative of the multi-variate binary function as a product of matrices; and caching within the memory medium (20) intermediate results to reduce a complexity of computing the first derivative.

6. The method according to the claim 5, wherein the processor (10) is configured to update a single matrix in the MPS representation when a variable changes, where the MPS representation is a data stored in the storage medium (20).

7. The method according to any one of the preceding claims, wherein the multi-variate binary function is simulated annealing algorithm which is a pre-defined function data for an instruction to the processor (10) that stored in the memory medium (20).

8. The method according to the claim 2, wherein configuring the processor (10) for resolving optimization problems in a data that stored on at least one memory medium (20) with compressing the data with tensorization step which are achieved by reduce a bond dimension of the MPS representation that obtained with MPS generator (100), MPS constructor (200) and MPS decomposition module (300) for increasing computational efficiency.

9. The method according to any one of the preceding claims, wherein construction of the matrix product state with a bond dimension no longer than N/2, where N is the number of variables with the MPS constructor (200).

10. The method according to any one of the preceding claims, wherein the processor (10) configured to computing a first derivative of the multi-variate binary function as a product of matrices; and updating a single matrix in the MPS representation when a variable changes for minimizing the multi-variate binary function using the simulated annealing algorithm adapted for the MPS format.

11. A computer (C) program product comprising instructions which, when the program is executed by at least one processor (10), cause the at least one processor (10), to carry out a method according to any one of claims 1-10.

12. A computer-readable data carrier has stored thereon a computer (C) program product according to claim 11.

13. A system (S) for optimizing a multi-variate binary function for annealing tasks for real world data, comprising:

   at least one memory medium (20) storing instructions; and
   at least one processor (10) or processor (10) group configured to execute the instructions to:

   A MPS generator (100) creates data in a matrix product state (MPS) format from the multi-variate binary function by generating a representation that selected from matrices corresponding to binary variables
   a MPS constructor (200) employs construction of the matrix product state with a bond dimension from the configuration of the MPS representation that provided with multiplying matrices selected by binary variables;
   a MPS decomposition module (300) decomposes at least one vector in the matrix product state structure of the data for obtaining optimal decomposition;
   and TN compressor (400) applies maximal bond dimension to the tensor train of the matrix product state according to the number of variables for compressing the MPS representation using a tensor network compression technique to reduce a bond dimension of the data stored in the memory medium (20).

14. The system (S) according to the claim 13, wherein the processor (10) is further configured to execute the instructions to represent the quadratic unconstrained binary optimization (QUBO) problem as an MPS data pack within the memory medium (20) with a bond dimension no larger than N/2, where N is a number of variables in the QUBO problem function variables.

15. The system (S) according to the claim 13 or 14 comprises, at least one classical computer (C) that includes at least one processor (10) that initialized the data and at least one quantum device that communicated the classical computer and includes at least one quantum processor as a processor (10) and quantum processor process the data and sends results to the classical computer.

Figure 1

Figure 2

**QUBO:**

- $f(\mathbf{x}) = \mathbf{x}^T Q \mathbf{x}$

- $\dfrac{df}{d\mathbf{x}} = Q\mathbf{x}$

- $\dfrac{d^2 f}{d\mathbf{x}^2} = Q$

**MPS:**

Figure 3

1- For $\beta$ in $\beta_{\text{schedule}}$:

2-     For $x_i$ in $\mathbf{x}$:

3-       $\delta x_i = -2x_i$ # eg for $x_i \in \{-1,1\}$

                                          (tensor contraction)

4- $\mathcal{O}(r)^* \;\; \delta f \leftarrow \dfrac{\partial f}{\partial x_i} \delta x_i$
    $(r \ll d)$
    $\longrightarrow$    $\dfrac{\partial f}{\partial x_i} \delta x_i =$

                                        *Can be made efficient by making use of sequential updates and caching

5-       If $\delta f < 0$ or $\exp(-\beta \delta f) > \text{random}(0,1)$:

6-          $x_i \leftarrow x_i + \delta x_i$ # Update x_i

                                         (update 1 tensor)

7- $\mathcal{O}(1) \;\; \dfrac{df}{d\mathbf{x}} \leftarrow \dfrac{df}{d\mathbf{x}} + \dfrac{\partial}{\partial x_i}\dfrac{df}{d\mathbf{x}} \delta x_i$ # Update df/dx  $\longrightarrow$  $\dfrac{df}{d\mathbf{x}} \leftarrow$

8-       end **If**

9-     end **For**

10-  end **For**

Figure 4

storing at least one vector within the memory medium and defining vector-scalar multiplication followed by a vector addition parameter on the multi-variate binary function

↓

obtaining to multi-variate binary function which is a data that stored in the memory medium

↓

creating data in a matrix product state (MPS) format from the multi-variate binary function by generating a representation through matrix multiplications selected from matrices corresponding to binary variables

**100**

↓

construction of the matrix product state with a bond dimension

**200**

↓

decomposing at least one vector in the matrix product state structure of the data for obtaining optimal decomposition

**300**

**400**

Compressing the obtained Matrix Product State accomplished with the configuration of MPS representation using a tensor network compression technique to reduce a bond dimension of the MPS representation of the data that stored in the memory medium

←

applying maximal bond dimension to the tensor train of the matrix product state according to the number of variables

↓

determining and storing final state of the tensor train within the memory medium

Figure 5

Europäisches
Patentamt
European
Patent Office
Office européen
des brevets

**EUROPEAN SEARCH REPORT**

Application Number

EP 24 22 3812

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIQUEL ALBERT\'I BINIMELIS: "Quantum Annealing and Tensor Networks: a Powerful Combination to Solve Optimization Problems", ARXIV.ORG, CORNELL UNIVERSITY LIBRARY, 201 OLIN LIBRARY CORNELL UNIVERSITY ITHACA, NY 14853, 7 December 2024 (2024-12-07), XP091932605, * the whole document * | 1-15 | INV. G06N5/01 G06N10/60 ADD. G06N3/045 |
| A | Mugel Samuel ET AL: "Dynamic Portfolio Optimization with Real Datasets Using Quantum Processors and Quantum-Inspired Tensor Networks", , 30 June 2020 (2020-06-30), XP055821415, Retrieved from the Internet: URL:https://arxiv.org/pdf/2007.00017.pdf [retrieved on 2021-07-06] * Abstract; Sections I-III * | 1-15 | |
| A | PERELSHTEIN M R ET AL: "NISQ-compatible approximate quantum algorithm for unconstrained and constrained discrete optimization", ARXIV.ORG, CORNELL UNIVERSITY LIBRARY, 201 OLIN LIBRARY CORNELL UNIVERSITY ITHACA, NY 14853, 19 October 2023 (2023-10-19), XP091639107, * Abstract; Sections 1, 4 * | 1-15 | **TECHNICAL FIELDS SEARCHED (IPC)** G06N |

The present search report has been drawn up for all claims

| Place of search | Date of completion of the search | Examiner |
|---|---|---|
| The Hague | 2 June 2025 | Efthymiadis, K |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10691771 B2
- EP 3664099 A1
- US 9152746 B2
- US 11907325 B2
- US 20230409961 A1